## Europäisches Patentamt
## European Patent Office
### Office européen des brevets

(11) Publication number: **0 172 946**
**B1**

# EUROPEAN PATENT SPECIFICATION

(45) Date of publication of patent specification: **22.07.87**

(21) Application number: **84201246.0**

(22) Date of filing: **28.08.84**

(51) Int. Cl.⁴: **F 23 C 11/02,** F 23 J 3/04, B 01 J 8/00

(54) Fluidised bed combustion apparatus.

(43) Date of publication of application:
05.03.86 Bulletin 86/10

(45) Publication of the grant of the patent:
22.07.87 Bulletin 87/30

(84) Designated Contracting States:
BE CH DE FR GB LI NL SE

(56) References cited:
FR-A- 778 518
FR-A-2 383 395
LU-A- 61 203
US-A-4 242 972

TRANSACTIONS OF THE INSTITUTION OF
CHEMICAL ENGINEERS, vol. 52, 1974, pages
213-216, London, GB; D. HARRISON et al.:
"Shorter Communication. Suppression of
particle elutriation from a fluidised bed"

(73) Proprietor: **NEDERLANDSE CENTRALE
ORGANISATIE VOOR TOEGEPAST-
NATUURWETENSCHAPPELIJK ONDERZOEK**
**Juliana van Stolberglaan 148**
**NL-2595 CL The Hague (NL)**

(72) Inventor: **van Gasselt, Max Leo Geert**
**Burg. R. Nepveulaan 8**
**NL-7313 EZ Apeldoorn (NL)**
Inventor: **Rappoldt, Louis Marie**
**Essenburg 7**
**NL-7339 DV Ugchelen (NL)**

(74) Representative: **van der Beek, George Frans
et al**
**Nederlandsch Octrooibureau Johan de Wittlaan
15 P.O. Box 29720**
**NL-2502 LS 's-Gravenhage (NL)**

## Description

The invention relates to a fluidised bed combustion apparatus in which in the free afterburning zone or the so-called free-board above the bed at least one system of plates or baffles inclined with respect to the vertical is arranged so that at least one upwardly directed channel having internally inclined surfaces is formed, such channel, seen in a vertical section in at least one direction, comprising at least one group of two opposed arrays of superimposed inclined plates, all plates of each array of superimposed plates extending obliquely downwardly at an angle with the vertical within 20°—50° from the outside to the inside from a vertical wall defining said channel whereas the plates of the one array are off-set in the vertical direction with respect to the plates of the other array, and the end portion of each plate or baffle comprises by a vertical downwardly extending edge portion. An apparatus of this kind is known from the EP—A—117003 (published 29.08.84), falling under Art 54.3 EPC.

The application of a fluidised bed as a combustion apparatus has been recognized already for a long time as an attractive means for generating energy. In such a bed air is passed through a bed of particulate material consisting of a mixture of inert and combustible materials such as bituminous coal having a high sulfur content and usually an absorbant material, mostly limestone, for absorbing sulfur dioxyde which is formed as a result of the combustion of the coal. As a result of passing air through the bed said bed is fluidised whereby the combustion of the combustible material is promoted.

The advantages of such a fluidised bed are an outstanding heat transfer, a substantially uniform bed-temperature, a combustion at a relative low temperature, easy handling of the combustible materials, a decreased attack of and formation of deposits in the boiler and a decrease of the dimensions of said boiler and an improved control of the emission of harmful matter.

The quantity and the velocity of the air supplied to the bed must be sufficient for keeping the bed in a fluidised state. As a result a portion of the particulate bed material is entrained by the air which flows through the bed which material contains among other things particles of the combustable material and of the material for bonding the sulphur which have not reacted. The air which has flown through the bed together with the gaseous combustion products and the particulate material entrained thereby flows in the free-board above the bed which forms a second reaction zone in which the partial combustion of the entrained solid particles and the gaseous combustion products is continued and wherein a partial reduction of the NOx formed in the bed and moreover a continued bonding of sulphur takes place.

After the free board the reaction gases and the entrained granular material are passed to a dust catcher for separating solid particles from the gases, which particles are subsequently discharged or passed to an apparatus which is not linked up with the fluidised bed. Because the granular material as discharged contains solid substances which have not reacted, the efficiency of the fluidized bed combustion apparatus is not optimal.

In order to increase the efficiency of a fluidised bed combustion apparatus, in said European patent application is proposed to arrange in the free board a system of downwardly inclined plates or baffles so that the solid particles entrained by the gas stream are separated from the main stream by centrifugal forces and are retained for some time while recirculating in the spaces underneath the baffles whereby an intensive solid matter-gas contact occurs. Only at the lowermost baffles entrained particles will impinge on the baffles and fall back into the bed.

By the extended period of time during which the solid particles remain in the free board and the intensive contact between solid particles and gases occuring thereby, the combustible particles are substantially completely burned whereas the bonding of sulphur with the aid of entrained particles of limestone will be more complete. By attrition and impingments on the baffles of lime particles having already reacted with $SO_2$ the outermost layer of $CaSO_4$ formed thereby will be knocked off, whereby these particles will become active again for the bonding of $SO_2$, so that the limestone added to the fluidised bed can be utilized to the fullest extent. Also the reduction of Nitrogen oxides while catalized by active carbon and calciumsulphate or otherwise and the combustion of aliphatic and aromatic hydrocarbons will be more complete.

Thus the flue gases ultimately obtained are cleaned to a great extent. Advantageously, thereby the apparatus is capable of having a pressurized fluidised bed so that after an additional slight cleaning operation of the flue gases can be passed to a turbine or similar machine for driving the same.

Also the quality of the ashes ultimately obtained is improved in that said ashes substantially do not contain carbon and far less active lime and consist substantially of relative fine particles so that these ashes can be utilized as a filler e.g. in the manufacturing of stones without any additional grinding operation.

The object of the present invention is to provide a free board of the above mentioned type having an improved efficiency.

This object is attained in that according to the invention underneath each baffle or plate an inwardly extending protrusion is arranged which in vertical section is substantially triangulary shaped and which is mounted with its base to said vertical wall so that the apex of the triangle is spaced apart from the terminal edge of the associated baffle in horizontal direction over a distance "c" for which applies $0<c<\frac{1}{2}A$ and in vertical direction over a distance "d" downwardly, or "e" upwardly from said terminal edge for which applies $0\leq$ d or e $<\frac{1}{2}$A, "A" being the horizontal distance over which the channel walls are spaced apart.

Preferably the terminal end portion of said edge portion is bent towards the wall on which the respective plate is mounted at an angle with the vertical which is 50° at the most.

By said protrusion the flow pattern of the gases in the channel is affected so that the separation of the particles from the main flow through the channel to the zones of circulating flows beneath the baffles is improved whereby the concentration of the particles in the areas underneath the zones of circulating flows beneath the baffles is increased so that the mean rising velocity of the solid particles in the channel is decreased resulting into an increase of the mean period of time during which the solid particles remain in the free board.

Advantageously some of the above mentioned reactions can be accelerated by coating the plates or baffles and/or said protrusions with or forming them from a material which acts as a catalyser for some of these reactions.

By forming a plurality of channels disposed side by side the distribution of the flow rates over the cross-sectional area of the free board becomes more uniform whereby the flow from the bed into the free board is improved.

In an apparatus according to the invention the solid particles leaving the bed and returned thereafter are returned to the same bed as from which they have originated so that in controlling by partial load by means of stopping a bed-section no accumulation of ash-particles on such stopped bed-section will occur.

Further advantageously gravity tubes for an overbed-feed and/or a construction for feeding tertiary air can be arranged in the baffle—construction according to the invention, which tertiary air is preferably preheated by the free board and permits a combustion in the fluidised bed in two stages. The combustible material can be metered on top of the bed by means of a spreader stoker.

The invention will be described in more detail by referring to the drawing in which:

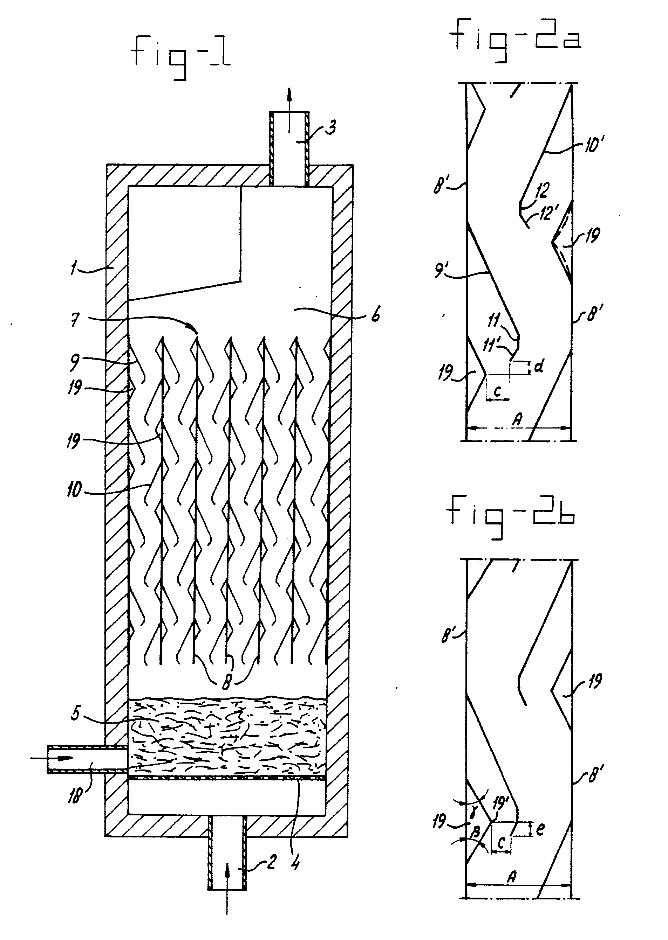

Figure 1 shows schematically in vertical section a fluidised bed combustion apparatus according to the invention, and Figures 2a and 2b shows on a larger scale one of the channels formed in the free board of the apparatus according to figure 1.

As shown in figure 1 the fluidised bed combustion apparatus comprises a housing 1 having an inlet 2 for the fluidising combustion air, an outlet 3 for the discharge of combustion gases and an inlet 18 for feeding combustible material and additions. A grid-like distributor plate 4 is arranged inside the housing which supports a bed 5 of granular material to be fluidised.

In the free board 6 above the bed 5 an array of obliquely extending plates or baffles 7 is arranged.

As more clearly shown in figures 2a and 6b the free ends of the plates or baffles 9', 10' are formed by a vertically and downwardly extending edge portion 11 and 12 respectively and a terminal edge 11' and 12' respectively which is bent outwardly at an angle with the vertical of utmost 50°. The edge portions 11' and 12' may be left out so that the free ends of the plates 9' and 10' are formed only by portions 11 and 12.

Triangulary shaped protrusions 19 are mounted to the walls 8' underneath the baffles 9', 10' so that the apex 19' of a protrusion is spaced apart from the terminal edge of the associated baffle in horizontal direction over a distance "c" and in vertical direction over a distance "d" (fig. 2a) or "e" (fig. 2b), for "c" applying $0<c<\frac{1}{2}$A and for "d" and "e" applying $0\leq$ d, e $\leq$ 1A, "A" being the horizontal distance over which the channel walls (8') are spaced apart. The angles ß and γ (fig. 2b) may be of the same magnitude or not.

As shown in figure 2a in dash lines one or both walls of the protrusions may be concavely curved.

## Claims

1. A fluidised bed combustion apparatus in which in the free after-buring zone or the so-called free-board (6) above the bed at least one system of plates or baffles (7) inclined with respect to the vertical is arranged so that at least one upwardly directed channel having internally inclined surfaces if formed, such channel, seen in a vertical section in at least one direction, comprising at least one group of two opposed arrays of superimposed inclined plates (9, 10), all plates of each array of superimposed plates extending obliquely downwardly at an angle with the vertical within 20°—50° from the outside to the inside from a vertical wall (8') defining said channel whereas the plates of the one array are off-set in the vertical direction with respect to the plates of the other array, and the end portion of each plate or baffle comprises a vertical downwardly extending edge portion (11, 12), characterized in that underneath each baffle or plate (9', 10') an inwardly extending protrusion (19) is arranged which in vertical section is substantially triangulary shaped and which is mounted with its base to said vertical wall (8') so that the apex of the triangle is spaced apart from the terminal edge (11', 12') of the associated baffle in horizontal direction over a distance "c" for which applies $0< c < \frac{1}{2}$A and in vertical direction over a distance "d" downwardly, or "e" upwardly from said terminal edge (11', 12') for which applies $0 \leq$ d or e $< \frac{1}{2}$A, "A" being the horizontal distance over which the channel walls 8' are spaced apart.

2. Apparatus according to claim 1, characterized in that the terminal edge portion (11', 12') of said edge portion (11, 12) is bent towards the wall on which the respective plate is mounted at an angle with the vertical which is 50° at the most.

3. Apparatus according to claims 1 or 2, characterized in that at least one wall of said triangulary shaped protrusion (19) is concavely curved.

4. Apparatus according to claims 1-3, characterized in that the plates or baffles (7) and/or said protrusions (19) are coated with or formed form a catalyser material.

5. Apparatus according to claims 1—4, characterized in that a plurality of systems of sloping plates or baffles (7) are arranged on top of each other.

## Patentansprüche

1. Wirbelbett-Verbrennungsvorrichtung, in der in der freien Nachbrennzone oder dem sog. Frieboard (6) oberhalb des Bettes wenigstens ein System von Platten oder Schikanen (7) angeordnet ist, die gegen die Vertikale derart geneigt sind, daß wenigstens ein nach oben gerichteter Kanal gebildet wird, der nach innen geneigte Oberflächen aufweist, wobei ein solcher Kanal im Vertikalschnitt gesehen in wenigstens einer Richtung wenigstens eine Gruppe aus zwei gegenüberstehenden Anordnungen übereinanderliegender geneigter Platten (9, 10) enthält, alle Platten einer jeden Anordnung aus übereinanderliegenden Platten sich schräg nach unten unter einem Winkel zur Vertikalen zwischen 20° und 50° von außen nach innen von einer vertikalen Wand (8') erstrecken, die den Kanal begrenzt, während die Platten der einen Anordnung in vertikaler Richtung in bezug auf die Platten der anderen Anordnung versetzt sind und der Endabschnitt einer jeden Platte oder Schikane einen sich vertikal nach unten erstreckenden Randabschnitt (11, 12) aufweist, dadurch gekennzeichnet, daß unterhalb einer jeden Schikane oder Platte (9', 10') ein sich nach innen erstreckender Vorsprung (19) angeordnet ist, der im Vertikalschnitt im westentlichen dreieckförmig gestaltet ist und der mit seiner Basis an der vertikalen Wand (8') derart befestige ist, daß die Spitze des Dreiecks vom Endrand (11', 12') der zugehörigen Schikane einen Abstand hat, dessen Größe "c" in horizontaler Richtung der Bedingung $0 < c < \frac{1}{2}A$ und dessen Größe "d" in vertikaler Richtung nach unten oder "e" nach oben vom Endrand (11', 12') der Bedingung $0 \leq d$ oder $e < \frac{1}{2}A$ genügt, wobei "A" die horizontale Distanz ist, um die die Kanalwände voneinander entfernt sind.

2. Vorrichtung nach Anspruch 1, dadurch gekennzeichnet, daß der Endrandabschnitt (11', 12') des Randabschnitts (11, 12) gegen die Wand, an der die entsprechende Platte befestigt ist, unter einem Winkel gegen die Vertikale gebogen ist, der maximal 50' ist.

3. Vorrichtung nach den Ansprüchen 1 oder 2, dadurch gekennzeichnet, daß wenigstens eine Wand des dreieckig geformten Vorsprungs (19) konkav gebogen ist.

4. Vorrichtung nach den Ansprüchen 1 bis 3, dadurch gekennzeichnet, daß die Platten oder Schikanen (7) und/oder die Vorsprünge (19) mit einem Katalysatormaterial beschichtet oder daraus gebildet sind.

5. Vorrichtung nach den Ansprüchen 1 bis 4, dadurch gekennzeichnet, daß mehrere Systeme schräger Platten oder Schikanen (7) übereinander angeordnet sind.

## Revendications

1. Appareil de combustion à lit fluidisé dans lequel est disposé, dans la zone libre après combustion, dite aussi franc-bord (6), située au-dessus du lit, au moins un ensemble de plaques ou chicanes (7) inclinées par rapport à la verticale, de façon à former au moins un conduit dirigé vers le haut comportant des surfaces inclinées vers l'intérieur , la conduit, vu en coupe verticale selon au moins une direction, comprenant au moins un groupe de deux rangées opposées de plaques inclinées superposées (9, 10), toutes les plaques de chacune des rangées de plaques superposées s'étendant obliquement vers le bas suivant un angle de 20 à 50 degrés par rapport à la verticale, de l'extérieur vers l'intérieur, depuis une paroi verticale (8') définissant le conduit, tandis que les plaques de la première rangée sont décalées dans le sens vertical par rapport aux plaques de l'autre rangée et que la partie d'extrémité de chaque plaque ou chicane comprend une partie de bord verticale s'étendant vers le bas (11, 12), caractérisé en ce que, sous chaque chicane ou plaque (9', 10'), est ménagée une saillie (19) s'étendant vers l'intérieur, qui est, en coupe verticale, de forme sensiblement triangulaire, et que est montée par sa base sur la paroi verticale (8'), de telle façon que le sommet du triangle est éloigné du bord extrême (11', 12') de la chicane associée, dans le sens horizontal, d'une distance "c" telle que $0 < c < \frac{1}{2}A$, et, dans le sens vertical, d'une distance "d" vers le bas ou "e" vers le haut telle que $0 \leq d$ ou $e < \frac{1}{2}A$, "A" étant la distance horizontale séparant les parois (8') du conduit.

2. Appareil conforme à la revendicaton 1, caractérisé en ce que la partie du bord extrême (11', 12') de la partie de bord (11, 12) est recourbée en direction de la paroi sur laquelle est montée la plaque correspondate selon un angle avec la verticale de 50 degrés au plus.

3. Appareil conforme à la revendication 1 ou 2, caractéisé en ce qu' au moins une paroi de la saillie en forme de triangle (19) est courbe et concave.

4. Appareil conforme à l'une des revendications 1 à 3, caractérisé en ce que les plaques ou chicanes (7) et/ou les saillies (19) sont recouvertes ou constituées d'un matériel catalyseur.

5. Appareil conforme à l'une des revendications 1 à 4, caractérisé en ce que plusieurs ensembles de plaques ou chicanes inclinées (7) sont disposés l'un au-dessus de l'autre.

fig-1

fig-2a

fig-2b